(19) **Europäisches Patentamt**

**European Patent Office**

**Office européen des brevets**

(11) **EP 1 142 043 B1**

(12) **EUROPEAN PATENT SPECIFICATION**

(45) Date of publication and mention
of the grant of the patent:
**11.08.2004 Bulletin 2004/33**

(51) Int Cl.$^7$: **H01M 6/10**, H01M 10/04

(21) Application number: **99964157.4**

(86) International application number:
**PCT/US1999/029040**

(22) Date of filing: **09.12.1999**

(87) International publication number:
**WO 2000/036667 (22.06.2000 Gazette 2000/25)**

(54) **ELECTROCHEMICAL CELL CLOSURE**

VERSCHLUSS EINER ELEKTROCHEMISCHEN ZELLE

FERMETURE DE CELLULE ELECTROCHIMIQUE

(84) Designated Contracting States:
**AT BE CH CY DE DK ES FI FR GB GR IE IT LI LU
MC NL PT SE**

(30) Priority: **15.12.1998 US 211758**

(43) Date of publication of application:
**10.10.2001 Bulletin 2001/41**

(73) Proprietor: **DURACELL INC.**
**Bethel, Connecticut 06801 (US)**

(72) Inventors:
• **SARGEANT, Sean, A.**
**Westford, MA 01866 (US)**

• **HAMILTON, Terry, L.**
**Danbury, CT 06811 (US)**

(74) Representative: **HOFFMANN EITLE**
**Patent- und Rechtsanwälte**
**Arabellastrasse 4**
**81925 München (DE)**

(56) References cited:
**WO-A-84/00642          US-A- 4 401 732**
**US-A- 5 424 145          US-A- 5 834 133**

## Description

This invention relates to electrochemical cells.

Electrochemical cells, such as alkaline batteries, are commonly used as energy sources. Generally, alkaline batteries have a cathode, an anode, a separator, and an alkaline electrolyte solution. The cathode is typically formed of a cathode material such as manganese dioxide, carbon particles, alkaline electrolyte solution, and a binder. The anode can be formed of a gel including alkaline electrolyte solution and an anode material such as zinc particles. The separator is disposed between the cathode and the anode. The electrolyte solution, which is dispersed throughout the battery, can be a hydroxide solution such as aqueous potassium hydroxide. The capacity of the electrochemical cell is related to the amount of anode material and cathode material that can occupy the cell within the physical and chemical constraints of the cell and electrochemical performance parameters.

In general, the invention features an electrochemical cell having a high capacity. The cell capacity can be increased by a method of selecting cell components to achieve particular volume ratios within the cell. Specific volume ratios that lead to high capacity include the ratio of the internal cell volume to the external volume. Using the method, cells having improved capacity, while maintaining safety features, can be prepared. In addition, the method can lead to a decrease in the amount of housing, cap, and seal material used in the cell.

The invention features a manganese dioxide electrochemical cell of one of the cell sizes AAAA, AAA, AA, C or D, as specified by the IEC including a housing, an insulating seal, and an end cap. The housing has an inner diameter, a closed end having an inner closed end surface, and an open end. The insulating seal has a seal volume and a seal thickness between 0.30 mm and 0.80 mm. The end cap has a structure that functions as a radial spring, the insulating seal being lined up against the end cap thereby forming the all closure. The cell closure has a closure volume. The housing and the cell closure are assembled at the open end of the housing with the insulating seal between the housing and the end cap to form the cell. The cell has an internal cell volume defined by the inner closure surface, the inner closed end surface, and the inner diameter of the housing. In addition, the cell has an external diameter and an external height within a cell size envelope. The cell size envelope has an external volume.

The ratio of the internal cell volume to the external volume is greater than about 0.86, preferably greater than 0.90, and more preferably greater than 0.92. The ratio of the closure volume to the external volume can be, for example, less than about 0.07, preferably less than about 0.05, and more preferably less than about 0.045. The ratio of the closure volume to the internal cell volume can be, for example, less than about 0.06. The ratio of the seal volume to the internal cell volume can be, for example, less than about 0.02. The ratio of the seal volume to the external volume can be, for example, less than about 0.02.

A ratio of the closure volume to the external volume can be less than about $0.175 - 0.393*\{\log_{10} (\text{external volume})\} + 0.386*\{\log_{10}(\text{external volume})\}^2 - 0.113*\{\log_{10}(\text{external volume})\}^3$. A ratio of the seal volume to the external volume can be less than $0.02 - 0.0065*\{\log_{10}(\text{external volume})\}$. A ratio of the internal cell volume to the external volume can be greater than $0.16*\{\log_{10} (\text{external volume})\}^3 - 0.55*\{\log_{10}(\text{external volume})\}^2 + 0.55*\{\log_{10}(\text{external volume})\} + 0.58$. Preferably, $\log_{10}(\text{external volume})$ is less than 1.

The external diameter of the cell can be about 10 mm (e.g., 10.2 mm; AAA cell), about 14 mm (e.g., 14.5 mm; AA cell), about 8 mm (e.g., 8.3 mm; AAAA cell), about 27 mm (e.g., 26.6 mm; C cell), or about 34 mm (e.g., 34.2 mm; D cell). Preferably, the external cell diameter can be about 10 mm, about 14 mm, or about 8 mm.

Other features and advantages will be apparent from the following description of embodiments of the invention, and from the claims.

FIG. 1 is schematic drawing depicting a cross-sectional view of an electrochemical cell.
FIG. 2 is a graph depicting the ratio of seal volume to external volume for each of the cell sizes.
FIG. 3 is a graph depicting the ratio of closure volume to external volume for each of the cell sizes.
FIG. 4 is a graph depicting the ratio of internal cell volume to external volume for each of the cell sizes.

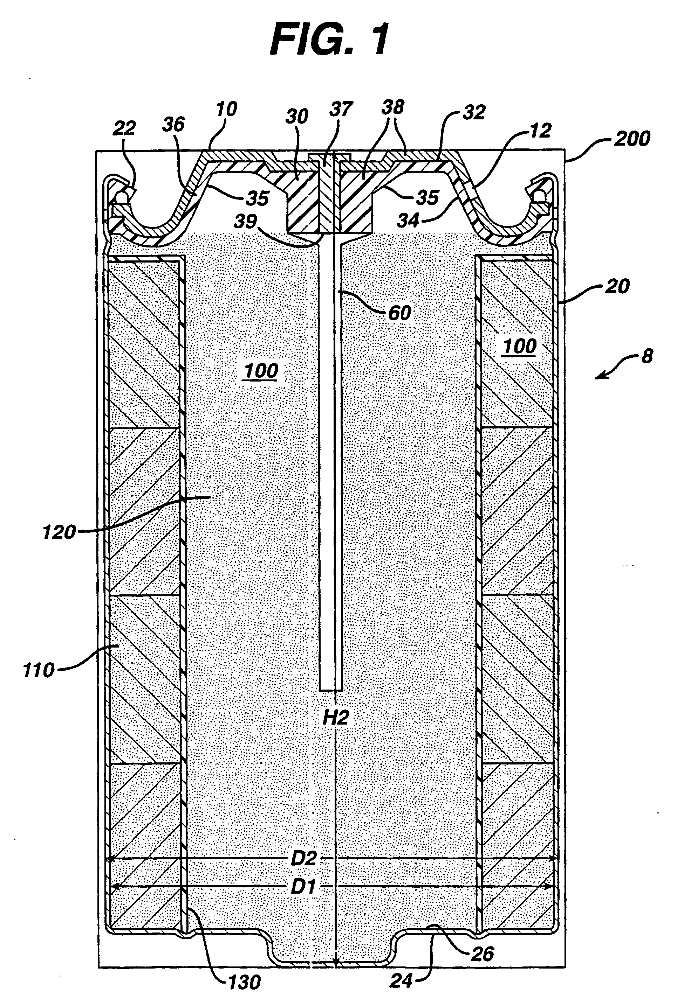

Referring to FIG. 1, an electrochemical cell 8 includes end cap 10 and cell housing 20. Cell housing 20 includes open end 22 and closed end 24 and an inner diameter D1. Closed end 24 has an inner surface 26. Cell 8 has dimensions that fit within overall cell height and width dimensions which together establish a cell size envelope, as specified by the International Electrotechnical Commission (IEC) for a variety of cell sizes, including AAAA, AAA, AA, C and D size cells. For example, AAAA size cells (IEC designation "LR61" cells) have a cell size envelope including a diameter of between about 7.7 and 8.3 millimeters and a length of between about 41.5 and 42.5 millimeters, AAA size cells (IEC designation "LR03" cells) have a cell size envelope including a diameter of between about 9.5 and 10.5 millimeters and a length of between about 42.5 and 44.5 millimeters, AA size cells (IEC designation "LR06" cells) have a cell size envelope including a diameter of between about 13.5 and 14.5 millimeters and a length of between about 49.0 and 50.5 millimeters, C size cells (IEC designation "LR14" cells) have a cell size envelope including a diameter of between about 26.2 and 28.7 millimeters and a length of between about 48.5 and 50.5 millimeters, and D size cells (IEC designation "LR20" cells) have a cell size envelope including a diameter of between about 32.2 and 34.2 millimeters and a length of between about 59.5 and 61.5 millimeters. The corresponding idealized cylindrical volumes based on the IEC overall cell height and width dimensions, or cell size envelope, establish external volume 200 for a particular cell size. Cell 8 has an external diameter D2 and an external height H2. For a particular cell size, diameter D2 and height H2 are selected to be within the cell size envelope. Housing 20 can be constructed of nickel plated steel.

Insulating seal 30 provides a seal between open end 22 and end cap 10. Insulating seal 30 and end cap 10 together form cell closure 32. Cell closure 32 has an inner surface 35. Insulating seal 30 has seal volume 36, which can be determined by dividing the mass of the seal by the density of the manufacturing material of the seal. Cell closure 32 has a closure volume 38. Closure volume 38 is the sum of seal volume 36, the portion of current collector volume 37 which penetrates closure 32 to projection surface 39, and the volume occupied by end cap 10. Projection surface 39 extends through current collector 60 as an imaginary extension (a horizontal surface in the cell is represented as a line in the cross-section shown in FIG. 1) of closure inner surface 35. Thus, closure volume 38 includes current collector volume 37. Closure volume 38 can be decreased by reducing seal volume 36 or by otherwise altering the geometry of seal 30 and the design of end cap 10. End cap 10 can be constructed of a conductive metal having good mechanical strength and corrosion resistance such as a nickel plated cold rolled steel or stainless steel, preferably, nickel-plated low carbon steel.

End cap 10 is designed to have a structure that functions as a radial spring, as described in U.S. Patent No. 5,759,713, or U.S. Patent No. 5,532,081, each of which is incorporated herein by reference. A radial spring design can allows the end cap 10 to withstand high radial compressive forces when housing 20 is crimped around end cap 10 and seal 30 to provide a tight seal even though the cell may be exposed to extremes in environmental temperature.

Insulating seal 30 can be an insulating-disk or grommet. Insulating disk 30 can be formed of a single piece construction of plastic insulating material, such as an injection molded plastic. Insulating seal 30 can be composed of a durable, corrosion resistant plastic such as a polyamide (e.g., nylon, such as nylon 6,6), polypropylene, talc filled polypropylene, sulfonated polyethylene, or other polyamide-like polymers. Insulating seal 30 can be permeable to hydrogen. Suitable insulating seal materials and structures are described in, for example, U.S. Patent No. 5,080,985, U.S. Patent No. 5,750,283, or U.S. Ser. No. 09/047,264, filed March 24, 1998, each of which is incorporated herein by reference.

End cap 10 includes aperture 12, which can be of various shapes, including circular, oval, rectangular or parallel-piped. Insulating seal 30 includes a small rupturable membrane portion 34 underlying aperture 12. The size of aperture 12 and the thickness of underlying rupturable membrane 34 can each be adjusted so that the membrane 34 will extrude through aperture 12 and rupture when gas pressure within cell 8 reaches a predetermined level. For example, the thickness of membrane 34 can be advantageously be between about 0.05 mm and 0.40 mm (e.g., between 0.20 mm and 0.40 mm) and the area of aperture 12 can be between about 3 $mm^2$ and 50 $mm^2$. For AAAA, AAA, AA, C and D size cells thickness of seal 30 is between 0.30 mm and 0.80 mm.

End cap 10 is in electrical contact with elongated current collector 60. Current collector 60 extends into internal cell volume 100, contacting cathode material 110 within cell 8. Current collector 60 can be selected from a variety of known electrically conductive metals found to be useful as current collector materials, for example, brass, tin plated brass, bronze, copper or indium plated brass. End cap 10 can function as an electrical terminal for the cell (e.g., a negative terminal for alkaline cell). Housing 20 is in contact with anode material 120 within cell 8, and closed end 24 can function as the other electrical terminal for the cell. In an alkaline cell, anode material 120 can include zinc metal and cathode material 110 can include manganese dioxide. Suitable zinc and manganese dioxide materials are well known in the art or are described, for example, in U.S. Patent Nos. 4,585,716, 5,277,890, 5,348,726, 5,482,796, or 5,391,365. Internal cell volume 100 also includes an electrolyte of potassium hydroxide. Suitable electrolytes are well known in the art. Separator material 130, such as rayon or cellulose, is located between the anode material and the cathode material.

Once end cap 10, housing 20, seal 30 are selected, and the housing is filled with the anode material and the cathode material, the cell is closed by inserting cell closure 32 into open end 22 of housing 10 and sealing the cell. Open end 22 sealed to end cap 20 by, for example, radial crimping, as described in U.S. Patent No. 5,150,602, which is incorporated herein by reference.

The electrochemical cell can include a condition tester for the cell, such as a thermochromic tester for the cell, as described in U.S. Patent Nos. 5,612,151 or 5,614,333, each of which is incorporated herein by reference, an electrochemical tester, as described in U.S. Patent No. 5,339,024, which is incorporated herein by reference, or a coulometric tester, as described in U.S. Patent No. 5,627,472, which is incorporated herein by reference.

The volume efficiencies of the cells are obtained as a result of the combination of numerous reductions in cell volume occupied by non-reactive elements of the cell. The non-reactive elements are primarily structural elements inside the cell, such as the overall cell height, housing outer diameter, cell closure height, can wall thickness, pip thickness (as defined by IEC Publication 86-2, Figure 1A, Dimension F and G), and cathode height. The size of these components can be selected within the constraints of the external volume for a cell size to increase the capacity of the cell. These selections can results in a higher internal cell volume. For example, end cap 10 occupies less space within cell 8 than conventional high compressive end caps for alkaline cells. In addition, seal 30 occupies less internal volume within cell 8. The structure of these two components can increase the overall capacity of the cell. In another example, insulating seal 30 and end cap 10 can contact everywhere, leaving no volume gaps, thereby minimizing closure volume 36. By occupying less space within the cell, internal cell volume 100 is increased within the restraints of external volume 200, thereby increasing the amount of additional anode and cathode active materials that can be included in the cell and increasing cell capacity.

The following examples are representative, and not limitive, of invention.

EXAMPLES 1-5 (Reference Examples)

Table 1 lists some of the dimensions of the cell components used to prepare five different cell sizes. Example 1 is a D size cell, Example 2 is a C size cell, Example 3 is a AA size cell, Example 4 is a AAA size cell, and Example 5 is a AAAA size cell.

TABLE 1

|  | Example 1 | Example 2 | Example 3 | Example 4 | Example 5 |
|---|---|---|---|---|---|
| Internal Volume (cc) | 42.36 | 19.68 | 6.28 | 2.89 | 1.65 |
| Overall Height (mm) | 60.38 | 49.37 | 50.15 | 44.2 | 42 |
| Housing Outer Diameter (mm) | 32.92 | 25.21 | 13.92 | 10.16 | 7.85 |
| Cell Closure Height (mm)[1] | 7.99 | 7.62 | 4.57 | 4.25 | 4.15 |
| Can Wall Thickness (mm) | 0.25 | 0.25 | 0.23 | 0.203 | 0.203 |
| Pip Thickness (mm) | 0.25 | 0.25 | 0.25 | 0.203 | 0.203 |
| Cathode Height (mm) | 47.8 | 41.35 | 42.6 | 38.42 | 34.65 |
| External Cell Volume (cc) | 56.495 | 26.956 | 8.339 | 3.853 | 2.299 |
| $\log_{10}$ (External Volume) | 1.7520 | 1.4306 | 0.9211 | 0.5858 | 0.3615 |
| Cell Diameter (mm) | 34.2 | 26.6 | 14.5 | 10.2 | 8.3 |
| Closure Volume (cc) | 3.605 | 1.973 | 0.432 | 0.218 | 0.18 |
| Seal Volume (cc) | 1.056 | 0.662 | 0.118 | 0.060 | 0.041 |
| Seal Volume / External Volume (%) | 1.87 | 2.46 | 1.42 | 1.57 | 1.79 |
| Closure Volume / External Volume (%) | 6.38 | 7.32 | 5.18 | 5.66 | 7.83 |
| Internal Volume / External Volume (%) | 74.98 | 73.01 | 75.31 | 75.01 | 71.77 |

[1] Measured from the cap to the skirt bottom.

Tables 1A and 1B, respectively, list some of the dimensions of comparative cells complying with the external volume limitation as Examples 1A-5A and Examples 1B-4B.

TABLE 1A

|  | Example 1A | Example 2A | Example 3A | Example 4A | Example 5A |
|---|---|---|---|---|---|
| Internal Volume (cc) | 42.01 | 18.87 | 5.91 | 2.7 | 1.41 |
| External Cell Volume (cc) | 56.495 | 26.956 | 8.339 | 3.853 | 2.299 |
| $\log_{10}$ (External Volume) | 1.7520 | 1.4306 | 0.9211 | 0.5858 | 0.3615 |
| Cell Diameter (mm) | 34.2 | 26.6 | 14.5 | 10.2 | 8.3 |
| Closure Volume (cc) | 4.613 | 2.759 | 0.651 | 0.329 | 0.329 |
| Seal Volume (cc) | 0.9737 | 0.6404 | 0.2193 | 0.1140 | 0.0614 |
| Seal Volume / External Volume (%) | 1.72 | 2.38 | 2.63 | 2.96 | 2.67 |

TABLE 1A   (continued)

|  | Example 1A | Example 2A | Example 3A | Example 4A | Example 5A |
|---|---|---|---|---|---|
| Closure Volume / External Volume (%) | 8.17 | 10.24 | 7.81 | 8.54 | 14.31 |
| Internal Volume / External Volume (%) | 74.36 | 70.00 | 70.87 | 70.08 | 61.53 |

TABLE 1B

|  | Example 1B | Example 2B | Example 3B | Example 4B |
|---|---|---|---|---|
| Internal Volume (cc) | 42.87 | 19.77 | 6.09 | 2.75 |
| External Cell Volume (cc) | 56.495 | 26.956 | 8.339 | 3.853 |
| $\log_{10}$ (External Volume) | 1.7520 | 1.4306 | 0.9211 | 0.5858 |
| Cell Diameter (mm) | 34.2 | 26.6 | 14.5 | 10.2 |
| Closure Volume (cc) | 3.764 | 2.083 | 0.532 | 0.241 |
| Seal Volume (cc) | 1.500 | 0.8596 | 0.2456 | 0.1140 |
| Seal Volume / External Volume (%) | 2.66 | 3.19 | 2.95 | 2.96 |
| Closure Volume / External Volume (%) | 6.66 | 7.73 | 6.38 | 6.25 |
| Internal Volume / External Volume (%) | 75.88 | 73.34 | 73.03 | 71.37 |

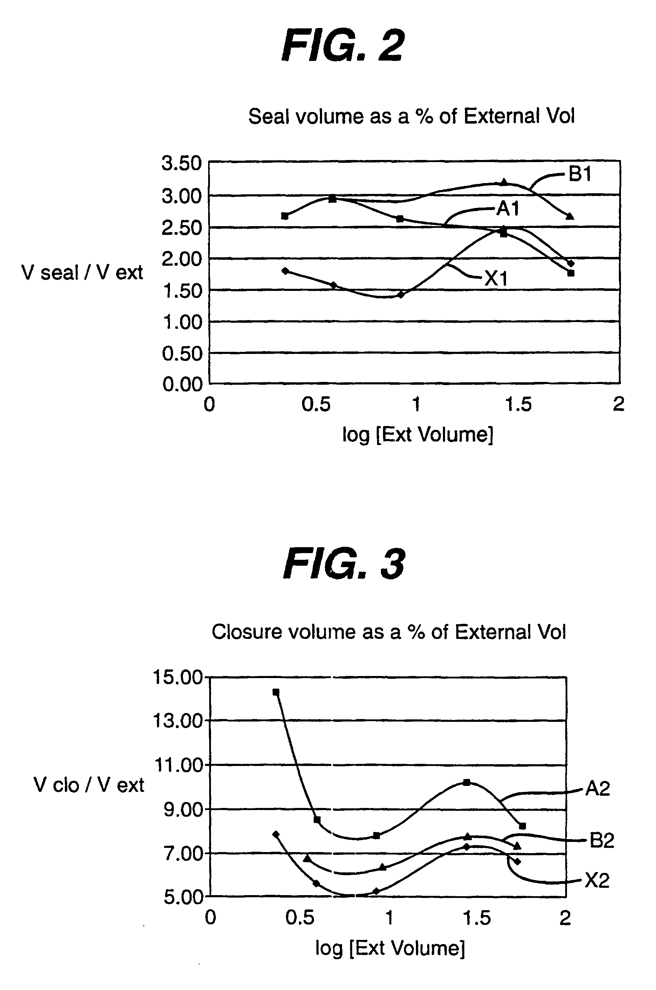

The relationships between the ratio of the seal volume to the external volume of each cell (as a percentage) are depicted in FIG. 2. FIG. 2 is a graph depicting the ratio of seal volume to external volume for each of the cell sizes, expressed as $\log_{10}$ (external volume). Curve X1 depicts the cells of Examples 1-5; curve A1 depicts the cells of Examples 1A-5A, and curve B1 depicts the cells of Examples 1B-4B. Least squares analysis the plotted data for Example 1-5 generated curve X1, which had the formula for $\log_{10}$ (external volume):

$$100*(\text{seal volume}) / (\text{external volume}) =$$

$$- 0.6489*\{\log_{10}(\text{external volume})\} + 1.9976,$$

and a correlation ($R^2$) of 0.9453. When the ratio is not represented as a percent, both sides of the formula is divided by 100.

The relationships between the ratio of the closure volume to the external volume of each cell (as a percentage) are depicted in FIG. 3. FIG. 3 is a graph depicting the ratio of seal volume to external volume for each of the cell sizes, expressed as $\log_{10}(\text{external volume})$. Curve X2 depicts the cells of Examples 1-5; curve A2 depicts the cells of Examples 1A-5A, and curve B2 depicts the cells of Examples 1B-4B. Least squares analysis the plotted data for Example 1-5 generated curve X2, which had the formula for $\log_{10}$ (external volume):

$$100*(\text{closure volume})/(\text{external volume}) =$$

$$- 11.312*\{\log_{10}(\text{external volume})\}^3 + 38.603*\{\log_{10}(\text{external volume})\}^2$$

$$- 39.283*\{\log_{10}(\text{external volume})\} + 17.571,$$

and a correlation ($R^2$) of 0.9925.

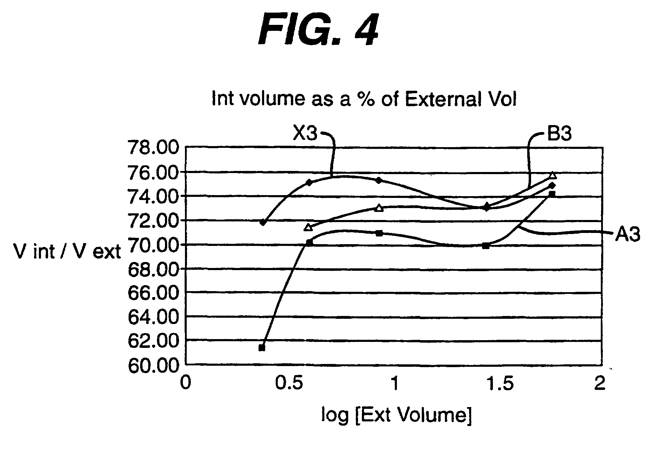

Furthermore, the relationships between the ratio of the internal cell volume to the external volume of each cell (as a percentage) are depicted in FIG. 4. FIG. 4 is a graph depicting the ratio of internal cell volume to external volume for each of the cell sizes, expressed as $\log_{10}(\text{external volume})$. Curve X3 depicts the cells of Examples 1-5; curve A3 depicts the cells of Examples 1A-5A, and curve B3 depicts the cells of Examples 1B-4B. Least squares analysis the plotted data for Example 1-5 generated curve X3, which had the formula for $\log_{10}(\text{external volume})$:

$$100*(\text{internal volume})/(\text{external volume}) =$$

$$16.53*\{\log_{10}(\text{external volume})\}^3 - 55.00*\{\log_{10}(\text{external volume})\}^2$$

$$+ 55.18*\{\log_{10}(\text{external volume})\} + 58.23,$$

and a correlation ($R^2$) of 1.0.

Examples 6-11

A set of cells was prepared selecting cell closures and insulating seals having smaller volumes than in Examples 1-5. For example, the AA size cell seals were thinned from a volume of 0.432 cubic centimeters to a volume of 0.120 cubic centimeters. In Examples 6 and 7, the larger volume seals had the structure described in U.S. Patent No. 5,080,985 and U.S. Patent No. 5,750,283. In Examples 8-11, the smaller volume seals had the structure describe in U.S. Ser. No. 09/047,264, filed March 24, 1998. In general, the seal volume was reduced by lining the seal up against the end cap, as depicted in FIG. 1, so that the cap can support and replace thick structural areas of previous seal designs. The seal depicted in FIG. 1 represents the general design of the family of seals used in Examples 8-11.

The cans of Examples 6 and 7 were 0.010 inches thick. The cans of Examples 8-11 were 0.008 inches thick. In the AA cells (Examples 8 and 10), the cans were 0.203 mm thick. In the AAA cells (Examples 9 and 11), the cans were 0.150 mm thick. The shape of the can was the same in Examples 6-11.

The dimensions of the cans in Examples 10 and 11 were maximized to the upper boundary of the IEC specifications. In Example 10, the cell size envelope was described by a height of 10.5 millimeters and a length of 44.5 millimeters, within manufacturing tolerances. In Example 11, the cell size envelope was described by a height of 14.5 millimeters and a length of 50.5 millimeters, within manufacturing tolerances.

The corresponding volume ratios for the cells of Examples 6-11 are listed in Table 2.

TABLE 2

|  | Example 6* | Example 7 | Example 8 | Example 9 | Example 10 | Example 11 |
|---|---|---|---|---|---|---|
| External Cell Volume (cc) | 8.339 | 3.853 | 8.339 | 3.853 | 8.339 | 3.853 |
| $\log_{10}$ (External Volume) | 0.921 | 0.5858 | 0.9211 | 0.5858 | 0.9211 | 0.5858 |
| Cell Diameter (mm) | 14.5 | 10.2 | 14.5 | 10.2 | 14.5 | 10.2 |
| Seal Volume/ External Volume (cc) | 1.58 | 1.68 | 1.60 | 1.71 | 1.60 | 1.71 |
| Seal Volume / Internal Volume (%) | 1.89 | 1.94 | 1.84 | 4.70 | 1.73 | 1.83 |
| Closure Volume / Internal Volume (%) | 6.88 | 7.54 | 4.70 | 5.15 | 4.42 | 4.97 |
| Closure Volume / External Volume (%) | 5.76 | 6.54 | 4.09 | 4.65 | 4.09 | 4.65 |
| Internal Volume / External Volume (%) | 83.68 | 86.68 | 87.01 | 90.28 | 92.60 | 93.56 |

* Example 6 is a Reference Example.

V Examples 6-11 have improved internal volumes, and corresponding capacity increases, as indicated in the higher ratio of internal volume to external volume for the cell size. Example 6 includes 3.76 A·h of zinc. The capacity of the Examples 8 and 10 scale linearly with the increase in internal volume compared to the capacity of Example 6. Example 7 includes 1.80 A·h of zinc. The capacity of the Examples 9 and 11 scale linearly with the increase in internal volume compared to the capacity of Example 7.

**EP 1 142 043 B1**

**Claims**

1. A manganese dioxide electrochemical cell (8) of one of the cell sizes AAAA, AAA, AA, C or D, as specified by the International Electrotechncial Commission (IEC),
   **characterized by**:

   a housing (20) and a cell closure (32), the housing (20) having an inner diameter (D1), a closed end (24) having an inner closed end surface (26), and an open end (22), and the cell closure including an insulating seal (30) having a seal volume (36) and a seal thickness between 0.30 mm and 0.80 mm and an end cap (10) having a structure that functions as a radial spring, the insulating seal (30) being lined up against the end cap (10) thereby forming the cell closure (32),
   the housing (20) and cell closure (32) being joined at the open end (22) of the housing (20) with the insulating seal (30) between the housing (20) and the end cap (10) to form the cell (8), the cell closure (32) having an inner closure surface (35) and a closure volume (38), the cell (8) having an internal cell volume (100) defined by the inner closure surface (35), the inner closed end surface (26), and the inner diameter (D1), and the cell (8) having an external diameter (D2) and an external height (H2) within a cell size envelope having an external volume (200),

   wherein a ratio of the internal cell volume (100) to the external volume (200) is greater than 0.86.

2. The electrochemical cell of claim 1, wherein the ratio of the internal cell volume (100) to the external volume (200) is greater than 0.90.

3. The electrochemical cell of claim 2, wherein the ratio of the internal cell volume (100) to the external volume (200) is greater than 0.92.

4. The electrochemical cell of claim 1, wherein the external diameter (D2) is 10 mm.

5. The electrochemical cell of claim 4, wherein the external diameter (D2) is 14 mm.

6. The electrochemical cell of claim 1, wherein a ratio of the closure volume (38) to the external volume (200) is less than 0.07.

7. The electrochemical cell of claim 6, wherein the ratio of the closure volume (38) to the external volume (200) is less than 0.05.

8. The electrochemical cell of claim 7, wherein the ratio of the closure volume (38) to the external volume (200) is less than 0.045.

9. The electrochemical cell of claim 7, wherein the external diameter (D2) is 10 mm.

10. The electrochemical cell of claim 7, wherein the external diameter (D2) is 14 mm.

11. The electrochemical cell of claim 1, wherein a ratio of the closure volume (38) to the internal cell volume (100) is less than 0.06.

12. The electrochemical cell of claim 1, wherein a ratio of the seal volume (36) to the internal cell volume (100) is less than 0.02.

13. The electrochemical cell of claim 1, wherein a ratio of the seal volume (36) to the external volume (200) is less than 0.02.

14. The electrochemical cell of claim 1, wherein the ratio of the internal cell volume (100) to the external volume (200) is greater than 0.90, a ratio of the seal volume (36) to the internal cell volume (100) is less than about 0.02, a ratio of the seal volume (36) to the external volume (200) is less than about 0.02, a ratio of the closure volume (38) to the internal cell volume (100) is less than about 0.06, and a ratio of the closure volume (38) to the external volume (200) is less than about 0.05.

7

**15.** The electrochemical cell of claim 14, wherein the external diameter (D2) is 10 mm.

**16.** The electrochemical cell of claim 14, wherein the external diameter (D2) is 14 mm.

**17.** The electrochemical cell of claim 1, wherein the end cap (10) includes an aperture (12) and the insulating seal (30) includes a rupturable membrane (34).

**Patentansprüche**

**1.** Elektrochemische Mangandioxidzelle (8) einer der Zellgrössen AAAA, AAA, AA, C oder D, gemäss Spezifikation durch die International Electrotechnical Commission (IEC), **gekennzeichnet durch**:

ein Gehäuse (20) und einen Zellverschluss (32), wobei das Gehäuse (20) einen inneren Durchmesser (D1), ein geschlossenes Ende (24) mit einer inneren Oberfläche des geschlossenen Endes (26) und ein offenes Ende (22) aufweist, und der Zellverschluss eine isolierende Dichtung (30) mit einem Dichtungsvolumen (36) und einer Dichtungsdicke zwischen 0,30 mm und 0,80 mm und einer Endkappe (10) mit einer Struktur, mit radialer Federfunktion, aufweist, wobei die isolierende Dichtung (30) an der Endkappe (10) anliegt, wodurch der Zellverschluss (32) gebildet wird,

das Gehäuse (20) und der Zellverschluss (32) an dem offenen Ende (22) des Gehäuses (20) mit der isolierenden Dichtung (30) zwischen dem Gehäuse (20) und der Endkappe (10) verbunden sind, wodurch die Zelle (8) gebildet wird, und der Zellverschluss (32) eine innere Verschlussoberfläche (35) und ein Verschlussvolumen (38) aufweist, die Zelle (8) ein inneres Zellvolumen (100) aufweist, das definiert ist **durch** die innere Verschlussoberfläche (35), die innere Oberfläche des geschlossenen Endes (26) und den inneren Durchmesser (D1), und die Zelle (8) einen äusseren Durchmesser (D2) und eine äussere Höhe (H2) innerhalb einer Zellgrössenumhüllung mit einem äusseren Volumen (200) aufweist,

wobei das Verhältnis des inneren Zellvolumens (100) zu dem äusseren Volumen (200) grösser als 0,86 ist.

**2.** Elektrochemische Zelle nach Anspruch 1, wobei das Verhältnis des inneren Zellvolumens (100) zu dem äusseren Volumen (200) grösser als 0,90 ist.

**3.** Elektrochemische Zelle nach Anspruch 2, wobei das Verhältnis des inneren Zellvolumens (100) zu dem äusseren Volumen (200) grösser als 0,92 ist.

**4.** Elektrochemische Zelle nach Anspruch 1, wobei der äussere Durchmesser (D2) 10 mm beträgt.

**5.** Elektrochemische Zelle nach Anspruch 4, wobei der äussere Durchmesser (D2) 14 mm beträgt.

**6.** Elektrochemische Zelle nach Anspruch 1, wobei das Verhältnis des Verschlussvolumens (38) zu dem äusseren Volumen (200) weniger als 0,07 beträgt.

**7.** Elektrochemische Zelle nach Anspruch 6, wobei das Verhältnis des Verschlussvolumens (38) zu dem äusseren Volumen (200) weniger als 0,05 beträgt.

**8.** Elektrochemische Zelle nach Anspruch 7, wobei das Verhältnis des Verschlussvolumens (38) zu dem äusseren Volumen (200) weniger als 0,045 beträgt.

**9.** Elektrochemische Zelle nach Anspruch 7, wobei der äussere Durchmesser (D2) 10 mm beträgt.

**10.** Elektrochemische Zelle nach Anspruch 7, wobei der äussere Durchmesser (D2) 14 mm beträgt.

**11.** Elektrochemische Zelle nach Anspruch 1, wobei das Verhältnis des Verschlussvolumens (38) zu dem inneren Zellvolumen (100) weniger als 0,06 beträgt.

**12.** Elektrochemische Zelle nach Anspruch 1, wobei das Verhältnis des Dichtungsvolumens (36) zu dem inneren Zellvolumen (100) weniger als 0,02 beträgt.

**13.** Elektrochemische Zelle nach Anspruch 1, wobei das Verhältnis des Dichtungsvolumens (36) zu dem äusseren Volumen (200) weniger als 0,02 beträgt.

**14.** Elektrochemische Zelle nach Anspruch 1, wobei das Verhältnis des inneren Zellvolumens (100) zu dem äusseren Volumen (200) mehr als 0,90 beträgt, das Verhältnis des Dichtungsvolumens (36) zu dem inneren Zellvolumen (100) weniger als etwa 0,02 beträgt, das Verhältnis des Dichtungsvolumens (36) zu dem äusseren Volumen (20) weniger als etwa 0,02 beträgt, das Verhältnis des Verschlussvolumens (38) zu dem inneren Zellvolumen (100) weniger als etwa 0,06 beträgt, und das Verhältnis des Verschlussvolumens (38) zu dem äusseren Volumen (200) weniger als etwa 0,05 beträgt.

**15.** Elektrochemische Zelle nach Anspruch 14, wobei der äussere Durchmesser (D2) 10 mm beträgt.

**16.** Elektrochemische Zelle nach Anspruch 14, wobei der äussere Durchmesser (D2) 14 mm beträgt.

**17.** Elektrochemische Zelle nach Anspruch 1, wobei die Endkappe (10) eine Öffnung (12) umfasst und die isolierende Dichtung (30) eine reissfähige Membran (34) umfasst.


**Revendications**

**1.** Cellule électrochimique au dioxyde de manganèse (8) de l'une des tailles de cellules AAAA, AAA, AA, C ou D, comme spécifiées par le « International Electrotechnical Commission (IEC) »,
**caractérisée par** :

un boîtier (20) et un capuchon de cellule (32), le boîtier (20) ayant un diamètre intérieur (D1), une extrémité fermée (24) ayant une surface d'extrémité intérieure fermée (26), et une extrémité ouverte (22), et le capuchon de cellule comprenant un joint d'isolation (30) ayant un volume de joint (36) et une épaisseur de joint entre 0,30 mm et 0,80 mm et un capuchon d'extrémité (10) ayant une structure qui fonctionne comme un ressort radial, le joint d'isolation (30) étant aligné contre le couvercle d'extrémité (10) formant de ce fait le capuchon de cellule (32),
le boîtier (20) et le capuchon de cellule (32) étant réunis à l'extrémité ouverte (22) du boîtier (20) avec le joint d'isolation (30) entre le boîtier (20) et le couvercle d'extrémité (10) pour former la cellule (8), le capuchon de cellule (32) ayant une surface de capuchon interne (35) et un volume de capuchon (38), la cellule (8) ayant un volume de cellule intérieur (100) défini par la surface de capuchon intérieure (35), la surface d'extrémité fermée intérieure (26), et le diamètre intérieur (D1), et la cellule (8) ayant un diamètre externe (D2) et une hauteur externe (H2) dans une enveloppe de la taille de la cellule ayant un volume externe (200),

dans laquelle un rapport du volume interne de la cellule (100) au volume externe (200) est supérieur à 0,86.

**2.** Cellule électrochimique selon la revendication 1, dans laquelle le rapport du volume interne de la cellule (100) au volume externe (200) est supérieur à 0,90.

**3.** Cellule électrochimique selon la revendication 2, dans laquelle le rapport du volume interne de la cellule (100) au volume externe (200) est supérieur à 0,92.

**4.** Cellule électrochimique selon la revendication 1, dans laquelle le diamètre externe (D2) est 10 mm.

**5.** Cellule électrochimique selon la revendication 4, dans laquelle le diamètre externe (D2) est 14 mm.

**6.** Cellule électrochimique selon la revendication 1, dans laquelle un rapport du volume de capuchon (38) au volume externe (200) est inférieur à 0,07.

**7.** Cellule électrochimique selon la revendication 6, dans laquelle le rapport du volume de capuchon (38) au volume externe (200) est inférieur à 0,05.

**8.** Cellule électrochimique selon la revendication 7, dans laquelle le rapport du volume de capuchon (38) au volume externe (200) est inférieur à 0,045.

**9.** Cellule électrochimique selon la revendication 7, dans laquelle le diamètre externe (D2) est 10 mm.

**10.** Cellule électrochimique selon la revendication 7, dans laquelle le diamètre externe (D2) est 14 mm.

**11.** Cellule électrochimique selon la revendication 1, dans laquelle un rapport du volume de capuchon (38) au volume interne de la cellule (100) est inférieur à 0,06.

**12.** Cellule électrochimique selon la revendication 1, dans laquelle un rapport du volume de joint (36) au volume interne de la cellule (100) est inférieur à 0,02.

**13.** Cellule électrochimique selon la revendication 1, dans laquelle un rapport du volume de joint (36) au volume externe (200) est inférieur à 0,02.

**14.** Cellule électrochimique selon la revendication 1, dans laquelle le rapport du volume interne de la cellule (100) au volume externe (200) est supérieur à 0,90, un rapport du volume de joint (36) au volume interne de la cellule (100) est inférieur à 0,02 environ, un rapport du volume de joint (36) au volume externe (200) est inférieur à 0,02 environ, un rapport du volume de capuchon (38) au volume interne de la cellule (100) est inférieur à 0,06 environ, et un rapport du volume de capuchon (38) au volume externe (200) est inférieur à 0,05 environ.

**15.** Cellule électrochimique selon la revendication 14, dans laquelle le diamètre externe (D2) est 10 mm.

**16.** Cellule électrochimique selon la revendication 14, dans laquelle le diamètre externe (D2) est 14 mm.

**17.** Cellule électrochimique selon la revendication 1, dans laquelle le couvercle d'extrémité (10) comprend une ouverture (12) et le joint d'isolation (30) comprend une membrane que l'on peut rompre (34).

# FIG. 1

# FIG. 2

Seal volume as a % of External Vol

# FIG. 3

Closure volume as a % of External Vol

# FIG. 4

Int volume as a % of External Vol